(19) Europäisches Patentamt

European Patent Office

Office européen des brevets

(11) Veröffentlichungsnummer: **0 564 435 B1**

(12) **EUROPÄISCHE PATENTSCHRIFT**

(45) Veröffentlichungstag der Patentschrift: **27.12.95**

(21) Anmeldenummer: **93890038.8**

(22) Anmeldetag: **08.03.93**

(51) Int. Cl.⁶: **B60C 11/12**

(54) **Fahrzeugreifen**

(30) Priorität: **03.04.92 AT 690/92**

(43) Veröffentlichungstag der Anmeldung:
**06.10.93 Patentblatt 93/40**

(45) Bekanntmachung des Hinweises auf die
Patenterteilung:
**27.12.95 Patentblatt 95/52**

(84) Benannte Vertragsstaaten:
**AT DE FR GB IT LU**

(56) Entgegenhaltungen:
**EP-A- 0 282 765**      **EP-A- 0 515 349**
**DE-A- 1 480 932**      **DE-A- 3 222 418**
**FR-A- 1 573 492**      **GB-A- 1 150 295**

(73) Patentinhaber: **Semperit Reifen Aktiengesellschaft**
**Wienersdorferstrasse 20-24**
**A-2514 Traiskirchen (AT)**

(72) Erfinder: **Beckmann, Otto, Dr.**
**Kapellengasse 5/1/5/21**
**A-2514 Traiskirchen (AT)**

(74) Vertreter: **Vinazzer, Edith et al**
**Semperit Reifen Aktiengesellschaft**
**Patentabteilung**
**Wienersdorferstrasse 20-24**
**A-2514 Traiskirchen (AT)**

## Beschreibung

Die Erfindung betrifft einen Reifen mit einer Lauffläche, die Profilelemente wie Blöcke, in Umfangsrichtung verlaufende Rippen oder dergleichen aufweist, die mit Lamellenfeineinschnitten und/oder Nuten versehen sind, deren einander gegenüberliegende Wandbereiche mittels vor- bzw. rückspringender Kanten und Flächen eine zumindest zum Teil voneinander abweichende dreidimensionale Struktur besitzen und zumindest zum Teil nicht parallel zueinander verlaufen.

Die Erfindung betrifft ferner auch Reifenformlamellen zum Erstellen Von Lamellenfeineinschnitten an Reifenlaufflächen.

Es ist bekannt, daß für die Griffeigenschaften eines Reifens die beim normalen Abrollen, beim Bremsen und beim Beschleunigen auftretende Gleitreibung zwischen dem Reifen und dem Untergrund eine wesentliche Rolle spielt. Beim fahrenden Fahrzeug ist zwischen Reifen und Untergrund stets ein Schlupf vorhanden, wobei beim Bremsen und Beschleunigen sowie beim Kurvenfahren ein wesentlich größerer Schlupf auftritt als beim normalen Abrollen. Es ist nun bekannt, daß ein Verringern des Schlupfes sowohl die Griff- und die Hafteigenschaften, als auch die Handlingeigenschaften von Reifen verbessern hilft und es ist daher ein Entwicklungsschwerpunkt, den Schlupf möglichst gering zu hatten. Die zu diesem Zweck bisher gesetzten Maßnahmen wurden einerseits auf der Laufflächenmischungsseite und andererseits auf der konstruktiven Seite, also durch entsprechende Gestaltung des Laufflächenprofiles, vorgenommen. Der Beitrag, den die Laufflächenmischung dabei leisten kann, läßt sich kurz so zusammenfassen, daß der Laufflächengummi in der Lage sein soll, beim Gleiten des Reifens über Unebenheiten des Untergrundes zyklische Deformationen zuzulassen, die einen Teil der kinetischen Energie aufzehren. Als konstruktive Maßnahme hat sich bisher bewährt, Lamellenfeineinschnitte in einer Breite von 0,4 bis ca. 0,8 mm in den Profilelementen auszubilden, um zusätzliche Griffkanten zu schaffen, die zu einer Verringerung des Schlupfes beitragen. Die schlupfvermindernde Wirkung von Reifenfeineinschnitten ergibt sich aber nicht bloß durch zusätzliche Griffkanten. Vor allem bei trockener Fahrbahn und starken Reifendeformationen, - Bedingungen, die etwa auch beim Test auf Fahrverhalten ("Handling") gegeben sind - reiben die gegenüberliegenden Wandungen von Reifenfeineinschnitten stark aneinander. Die dabei auftretenden Reibverluste werden der kinetischen Energie des Reifens entzogen und wirken ebenfalls schlupfvermindernd.

Es hat sich jedoch herausgestellt, daß die herkömmliche Lamellierung des Laufflächenprofiles trotzdem eine gewisse Verschlechterung im Handling (Fahrverhalten) bewirkt. Dies liegt daran, daß Reifenfeineinschnitte stets auch eine Labilisierung der Aufstandsgeometrie des Reifens bedeuten. Bei hohen Fahrgeschwindigkeiten wirkt sich das Labilisieren stärker aus als die positiven Effekte der zusätzlichen Griffkanten oder der dissipierten Reibenergie.

Weitere Nachteile, die sich aus der Anwendung von Reifenfeineinschnitten ergeben können, sind das erhöhte Aufnehmen von Steinen, Ausbrüche, die vom Grund der Reifenfeineinschnitte ausgehen und unregelmäßiger Abrieb.

Um die Nachteile von Feinschnitten zu mildern, ist es Stand der Technik und häufige Praxis, die Tiefe der Feinschnitte zu reduzieren, sei es über die gesamte Breite des Feinschnittes oder auch nur abschnittsweise. Dies bedeutet jedoch, daß während des Reifenlebens solche angehobenen Feineinschnitte früher oder später zur Gänze oder teilweise verlorengehen, woraus zwangsläufig eine mehr oder minder sprunghafte Verschlechterung der Griffeigenschaften der Reifen resultiert Es ist ferner Stand der Technik anstelle von völlig ebenen Reifenfeineinschnitten, Einschnitte zu verwenden, die, in radialer Draufsicht gesehen, wellen - oder zickzackförmig sind. Dadurch wird ein Aneinandervorbeigleiten gegenüberliegender Wandhälften der Feineinschnitte in lateraler Richtung wesentlich erschwert. Gegenüber völlig ebenen Reifeneinschnitten ergibt sich solcherart vor allem ein Vorteil im Fahrverhalten. Es sind aber auch Feineinschnitte bekannt, bei denen ein Zickzack oder eine Wellung in die Tiefe der Reifen verlaufen. Solcherart entstehende querorientierte Kanten innerhalb der Feineinschnitte werden z.B. in der DE-A 1 480 932, die Feineinschnitte gemäß dem Oberbegriff des Anspruches 1 offenbart, dazu genutzt, das Eindringen von Steinen bzw. deren Weiterwanderung zur Gürtelkonstruktion hin zu verhindern. Weiters werden z.B. in der EP-A1 0 282 765 spiegelbildliche Paare von Feineinschnitten mit in die Tiefe verlaufendem Zickzack vorgeschlagen. Die solcherart sich ergebende stets entgegengesetzte Neigung paariger Feineinschnitte soll insbesondere den Griff auf nasser, schneeiger oder eisiger Fahrbahn verbessern. Das in die Tiefe verlaufende Zickzack bewirkt ferner, daß zum Grund der Reifenfeineinschnitte hin die Relativbewegungen der aneinandergrenzenden Wandungen zueinander immer mehr abnehmen. Damit wird die Gefahr von Einrissen am Grund der Feineinschnitte zurückgedrängt, und auch die Neigung zu unregelmäßigem Abrieb entschärft.

Alle bisherigen wellen- oder zickzackförmigen bzw. von der Ebene abweichenden Reifenfeineinschnitte schränken die Relativbewegung der aneinandergrenzenden Wandungen zueinander nur in der Richtung des Wellenverlaufes bzw. Zickzack-

2

verlaufes ein. In der Richtung senkrecht hiezu sind die Wandungen der Feineinschnitte durch durchlaufende gerade Strecken beschreibbar. Die genannte Strukturierung der Feineinschnitte läßt auch hinsichtlich der Abflußmöglichkeiten von in die Einschnitte eingedrungenen Wassers zu wünschen übrig.

Hier setzt nun die Erfindung ein, die sich die Aufgabe gestellt hat, sowohl eine Verbesserung im Handling als auch verbesserte Beständigkeit gegen Einrisse, die vom Grund der Feineinschnitte ausgehen, sowie ein Zurückdrängen des unregelmäßigen Abriebs zu erreichen. Ziel der Erfindung ist es ferner, die Reibung der aneinandergrenzenden Wandungen der Feineinschnitte bei Deformationen, die durch Bremsen, Beschleunigen oder Kurvenfahren ausgelöst werden, zu erhöhen, um über diese dissipative Komponente den Reifenschlupf zu vermindern. Außerdem sollen die Feineinschnitte bzw. Nuten so gestaltet werden, daß eingedrungenes Wasser besser abfließen kann.

Diese Aufgabe wird bei einem Reifen der eingangs erwähnten Art erfindungsgemäß dadurch gelöst, daß die Wandbereiche überwiegend rückspringende Flächenelemente aufweisen, welche in spitzem Winkel zur Fahrfläche stehen, wobei bezüglich der Richtung des Feineinschnittverlaufes die rückspringenden Flächenelemente der einen Wand gegensinnig zu jenen der anderen Wand angeordnet sind.

Durch die Erfindung wird auf einfache Weise die Möglichkeit geschaffen, einen Teil der kinetischen Energie des schlupfenden Reifens über Reibung in Wärme umzuwandeln. Die Struktur der Wandbereiche der Lamellenfeineinschnitte läßt deren primären Zweck, nämlich an der Profiloberfläche zusätzliche Griffkanten zu bilden, unberührt. Es hat sich weiters gezeigt, daß die erfindungsgemäße Strukturierung der Wandbereiche die Wasserabfuhr erleichtert.

Erfindungsgemäße Ausgestaltungen von derartigen Reifen sowie Reifenform-Lamellen zur Herstellung von solchen Lamellenfeineinschnitten sind in unterschiedlichen Varianten in den Unteransprüchen enthalten.

Die Erfindung betrifft auch eine Reifenformlamelle zum Herstellen von Lamellenfeineinschnitten an Laufflächen von Reifen. Die Lamellenbleche lassen sich durch Tiefziehen oder Guß in bekannter Weise herstellen. Die erfindungsgemäße Lamelle eignet sich aber auch zum Herstellen entsprechend strukturierter Schuhsohlen aus Gummi.

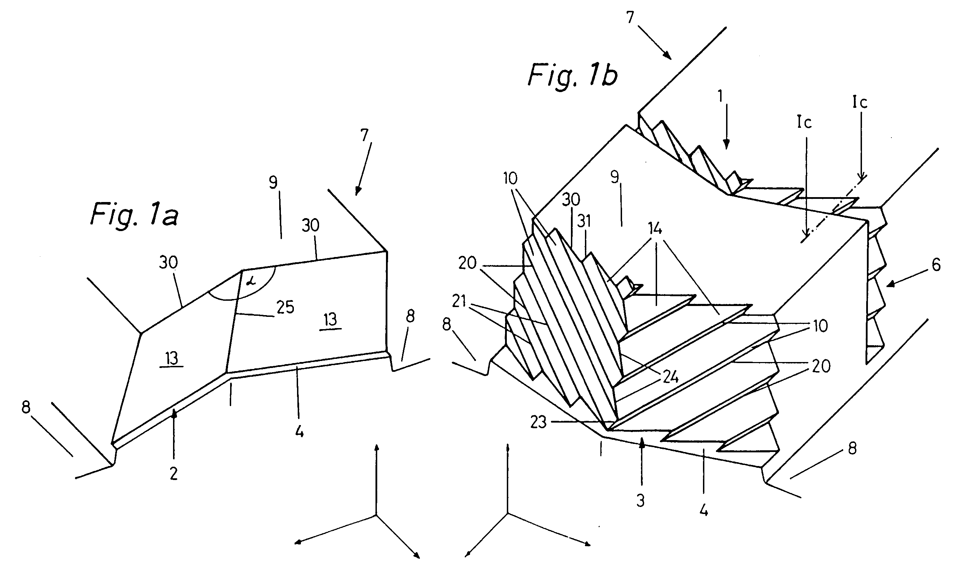

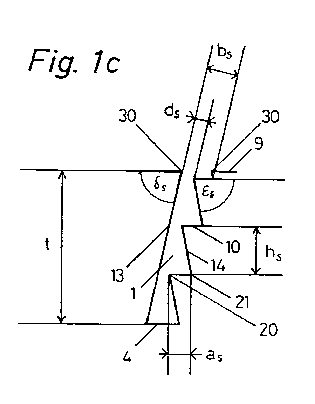

In der Zeichnung wird die Erfindung noch näher beschrieben. Die Ausführungsformen gemäß den Figuren 1 bis 4 zeichnen sich dadurch aus, daß sowohl ein guter Wasserabfluß aus den Feineinschnitten bzw. Nuten gegeben als auch eine verringerte Steinaufnahme zu beobachten ist.

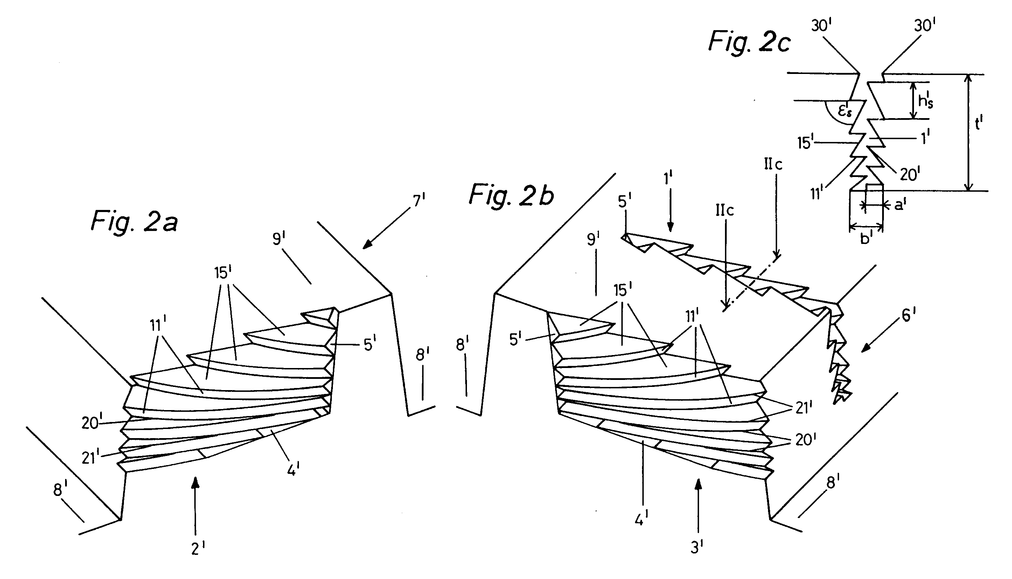

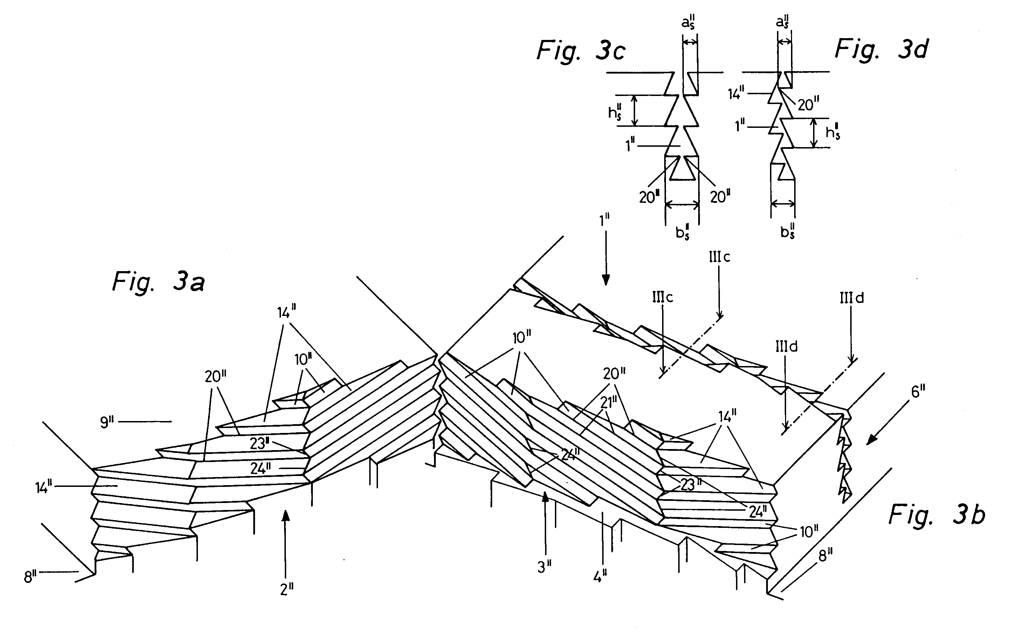

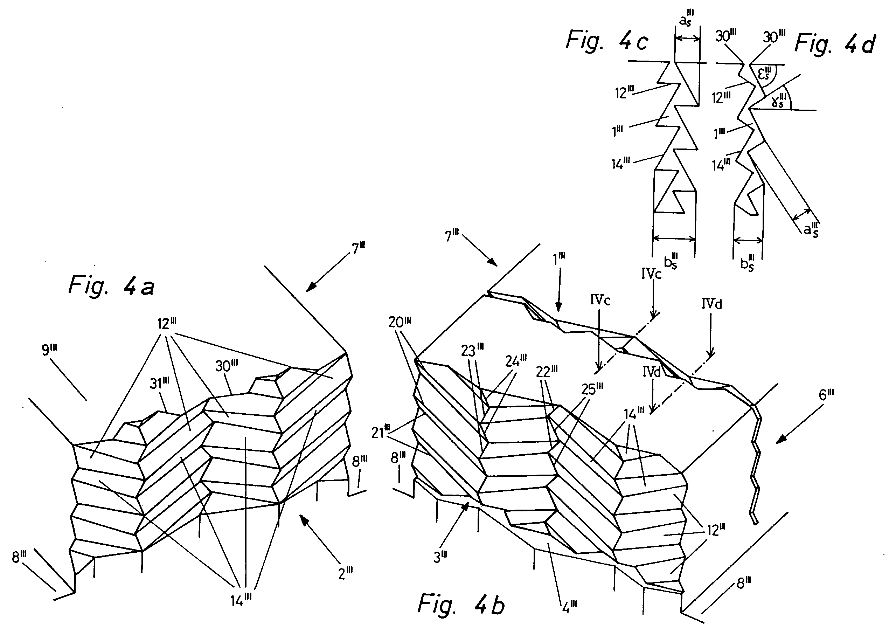

Fig. 1a, 1b bis 4a, 4b zeigen jeweils an einem Band erfindungsgemäße Feineinschnitte. Der Feineinschnitt ist jeweils in Gesamtansicht aber auch bei geteiltem Band zur Verdeutlichung der Feineinschnittwandungen dargestellt. Diese Darstellungen sind axonometrisch; für Fig. 1a, 1b bis 4a, 4b gelten die gleichen Blickrichtungen und Verkürzungen. Stets sind Schnittdarstellungen durch die Feineinschnitte ergänzend beigefügt. Dabei zeigt Fig. 1c einen Schnitt entlang der Linie Ic-Ic der Fig. 1b, Fig. 2c einen Schnitt entlang der Linie IIc-IIc der Fig. 2b, Fig. 3c einen Schnitt entlang der Linie IIIc-IIIc der Fig. 3b, Fig. 3d einen Schnitt entlang der Linie IIId-IIId der Fig. 3b, Fig. 4c einen Schnitt entlang der Linie IVc-IVc der Fig. 4b und Fig. 4d einen Schnitt entlang der Linie IVd-IVd der Fig. 4b. Alle Darstellungen verstehen sich für den unbelasteten Neureifen.

Aus Gründen der Übersichtlichkeit wurden alle Strukturen der Feineinschnitte scharfkantig dargestellt. Im Hinblick auf die Entformbarkeit nach der Reifenheizung und der Beständigkeit gegen Ermüdungsknicke am Reifen und in der Reifenheizform ist es aber angebracht, sowohl die vorspringenden als auch die einspringenden Kanten der Feineinschnitte gerundet auszuführen.

Im weiteren wurden folgende Bezeichnungen verwendet:

| | | |
|---|---|---|
| 1 | Feineinschnitt |
| 2 | Linke Wandung des Feineinschnittes 1 |
| 3 | Rechte Wandung des Feineinschnittes 1 |
| 4 | Bodenfläche des Feineinschnittes 1 |
| 5 | Stirnfläche eines sackförmigen Feineinschnittes 1 |
| 6 | Einmündung des Feineinschnittes 1 in die Nut 8 |
| 7 | Band |
| 8 | Nuten das Band 7 begrenzend |
| 9 | Fahrfläche |
| 10 | Absatzflächen eben |
| 11 | Absatzflächen zylindrisch |
| 12 | Absatzflächen mit progressivem Winkel |
| 13 | Überhangfläche eben durchlaufend |
| 14 | Überhangflächen eben an Absatzflächen 10 bzw. 12 angrenzend |
| 15 | Überhangflächen mit progressivem Winkel |
| 20 | Vorspringende Kanten in den Wandungen 2 und/oder 3 des Feineinschnittes 1 entstanden durch Schnitt von Absatzflächen 10 - 12 mit Überhangsflächen 14, 15 |
| 21 | Einspringende Kanten in den Wandungen 2 und/oder 3 des Feineinschnittes 1 entstanden durch Schnitt von Absatzflächen 10 - 12 mit Überhangsflächen 14, 15 |
| 22 | Vorspringende Kanten durch Schnitt benachbarter Absatzflächen 12 entstanden |
| 23 | Einspringende Kanten durch Schnitt be- |

nachbarter Absatzflächen 10, 12 entstanden

24    Vorspringende Kanten durch benachbarte Überhangfläche 14 entstanden

25    Einspringende Kanten durch benachbarte Überhangfläche 13, 14 gebildet

30    Spitzwinkelige Griffkanten am Übergang von Überhangfläche 13 - 15 zur Fahrfläche 9

31    Stumpfwinkelige Kante am Übergang von Absatzflächen 10 - 12 zur Fahrfläche 9
Knickwinkel der Hüllkurve des Feineinschnittes 1 in der Fahrfläche 9 erscheinend
Winkel der Kanten 20, 21 zur Fahrfläche 9
Winkel zwischen Absatzfläche 12 und Fahrfläche 9
Winkel zwischen Absatzfläche 12 und Fahrfläche 9 in Schnittdarstellung erscheinend
Winkel zwischen Überhangsfläche 13 und Fahrfläche 9
Winkel zwischen Überhangsfläche 12 und Fahrfläche 9 in Schnittdarstellung erscheinend
Winkel zwischen Überhangsfläche 14 bzw. 15 und Fahrfläche 9
Winkel zwischen Überhangsfläche 14 bzw. 15 und Fahrfläche 9 in Schnittdarstellung erscheinend

t     Tiefe des Feineinschnittes

h     Höhe der "Treppenstufe"

$h_s$    Höhe der "Treppenstufe" in Schnittdarstellung erscheinend

a     Absatzbreite der "Treppe"

$a_s$    Absatzbreite der "Treppe" in Schnittdarstellung erscheinend

b     Maximale Breite des Feineinschnittes 1

$b_s$    Maximale Breite des Feineinschnittes 1 in Schnittdarstellung erscheinend

d     Minimalabstand zwischen den Wandungen 2 und 3

$d_s$    Minimalabstand zwischen den Wandungen 2 und 3 in Schnittdarstellung erscheinend

Fig. 1 stellt ein Beispiel eines erfindungsgemäßen Feineinschnittes 1 dar, bei dem die rechte Wandung 3 (Fig. 1b) und die linke Wandung 2 (Fig. 1a) höchst unterschiedlich gestaltet sind.

Die linke Wandung 2 besteht aus zwei ebenen zueinander spiegelbildlichen überhängenden Flächen 13, die einen stumpfen Winkel miteinander einschließen, der sich in der Fahrfläche 9 als Winkel $\alpha$ abbildet. Beide Flächen 13 bilden mit der Fahrfläche 9 einen spitzen Winkel $\delta$, der sich im Schnitt Ic-Ic (Fig. 1c) als $\delta_s$ abbildet. Auch der Winkel, den die aus den Flächen 13 resultierende einspringende Schnittkante 25 mit der Fahrfläche einschließt, beträgt $\delta_s$.

Die rechte Wandung 3 ist ebenfalls spiegelbildlich aber "treppenförmig" aufgebaut. Die Hüllkurven der beiden "Treppenhälften" liegen im Feineinschnitt 1 parallel zu den Flächen 13 der linken Wandung. (Vergleiche dazu Schnitt Ic-Ic (Fig. 1c).) Die Treppen bestehen aus "Absatzflächen" 10 und Überhangflächen 14, die aufeinander abfolgen. Im Schnitt Ic-Ic (Fig. 1c) erscheinen die Absatzflächen 10 als Strecken, die zur Fahrfläche parallel liegen, die Überhangsflächen 14 erscheinen als Strecken, die zur Fahrfläche einen spitzen Winkel $\epsilon_s$ einschließen. Es bilden demnach sowohl die Überhangflächen 13 als auch 14 mit der Fahrfläche 9 spitzwinkelige Griffkanten 30' und verleihen dadurch dem Feineinschnitt 1 hohe Griffigkeit. Um eine Unstetigkeit der Griffleistung beim servicebedingten Abfahren des Reifens zu vermeiden, wurden die beiden "Treppenhälften" zur Mitte des Bandes 7 gekippt (Fig. 1b). Die Kanten 20, 21 schließen mit der Fahrfläche 9 den Winkel $\beta$ ein. Der Abstand zwischen den Wandungen 2 und 3 ist erfindungsgemäß so gewählt, daß am Fahrzeug in der Aufstandsfläche des Reifens die vorspringenden Kanten 20 die gegenüberliegenden Flächen 13 berühren, dies jedoch nicht für die einspringenden Kanten 21 zutrifft. Im belasteten Feineinschnitt 1 wechseln demnach linienförmige Kontakte mit verbleibenden Kanälen ab. Diese verbleibenden Kanäle ergeben - gegenüber den vollständig schließenden Feinschnitten herkömmlicher Art - zusätzliche Wasserabfuhr.

Es ist vorteilhaft für einen Feinschnitt gemäß Fig. 1 folgende Winkel zu wählen:

$$\alpha = 110 - 180° \quad \beta = 15 - 55° \quad \delta = 70 - 85° \quad \epsilon_s = 55 - 80°$$

Ferner sind folgende Einstellungen vorteilhaft:

$$t \geq 2{,}5\, h_s \qquad 4a \geq h_s \geq 2a$$
$$b \geq 2d \qquad d \leq a$$

Für Fig. 3 und 4 gelten die gleichen Empfehlungen. Für Fig. 1 ist ferner $b \geq 1{,}2a$ günstig.

Fig. 2 stellt einen sackförmigen Feineinschnitt 1' dar, bei dem die beiden Wandungen 2' und 3' treppenförmig gestaltet sind. Alle Kanten 20' und 21' gehorchen einer e-Potenz und sind zueinander parallel verschoben. Es wechseln zylindrische Absatzflächen 11' mit Überhangflächen 15' ab. Wie aus der Schnittdarstellung IIc-IIc (Fig. 2c) hervorgeht, hat der Feineinschnitt 1' über die gesamte Tiefe die gleichbleibende maximinimale Breite b' und eine gleichbleibenden Breite a' der Absatzflächen. Hingegen werden mit fortschreitender Tiefe des Feineinschnittes 1 die "Treppenhöhe" $h_s$' und der

Winkel der Übergangsflächen 15 immer geringer. Dem Verlust der Griffigkeit, der aus dem servicebingten Abfahren des Profiles resultiert, wird also durch immer spitzer werdende Griffkanten 30' entgegengewirkt.

Der Abstand der beiden Wandungen 2' und 3' ist so ausgelegt, daß am Fahrzeug in der Reifenaufstandsfläche in zumindest 2/3 der Feinschnittiefe die vorspringenden Kanten 20' mit den gegenüberliegenden Flächen 15' in Kontakt kommen (Fig. 2c). Gegenüber der Ausführungsform in Fig. 1 ergibt sich hier eine Verzahnung zwischen den Wandungen 2' und 3', die durchaus vorteilhaft ist, weil sie das Fahrverhalten verbessert und dem ungleichmäßigen Abrieb entgegenwirkt.

Der Winkel $\epsilon_s$' sollte im Bereich der Fahrfläche 9' 60 bis 80° betragen und sich bis zur Grundfläche 4' auf höchstens 40° verkleinern. Der Feinschnitt 1' soll über seine Tiefe t' (im Schnitt betrachtet) auf jeder Wandungsseite mindestens 3 Kanten 20' aufweisen. Günstig ist ferner die Einstellung b ≈ 2a.

Fig. 3 und 4 zeigen Lösungsmöglichkeiten auf, um die Verzahnung in Feinschnitten 1'' bzw. 1''' im Bereich der Einmündungen in die begrenzenden Nuten 8'' bzw. 8''' ausgeprägter zu gestalten, als im Mittelbereich der Bänder 7'' bzw. 7'''. Die höhere Verzahnung im Nutbereich wirkt dem unregelmäßigen Abrieb entgegen, und verbessert das Fahrverhalten, während der vergleichsweise aufgelockerte Mittelbereich der Feinschnitte 1'' bzw. 1''' für eine verbesserte Wasserabfuhr genutzt wird, bzw. im Fall 1''' auch vermehrt scharfe Griffkanten 30''' anbietet.

Fig. 3 zeigt eine Ausführung 1'', bei der beide Wandungen 2'' und 3'' treppenförmig ausgelegt sind. Wie aus Fig. 3c und 3d ersichtlich, bleibt die Breite a'' der Absatzflächen 10'' und die Höhe $h_s$'' der "Treppen" stets gleich. Im Nutbereich (Fig. 3d) verzahnen jedoch die Wandungen 2'' und 3'' durch die Kontakte zwischen den Kanten 20'' und den Flächen 14'', während in der Mitte des Feinschnittes 1'' unter Belastung bloß sich kreuzende Kanten 20'' berühren. Die maximale Breite $b_s$'' des Feineinschnittes 1'' vergrößert sich von der Schulter zur Mitte hin (Fig. 3c, 3d) und im gleichen Sinne nimmt auch die Wasserabfuhr zu.

Der Feineinschnitt 1''' in Fig. 4 weist im Bereich 6''', das heißt im Einmündungsbereich in die Nut 8''', Wandungen auf, die zueinander parallel sind und für die das Verhältnis Überhangflächen 14'''/Absatzflächen 12''' gleich 1 ist. Überhangflächen 14'''/und Absatzflächen 12''' schneiden die Nut 6''' unter gegenläufigem Winkel. Zur Mitte des Bandes 7''' hin wird die Breite der Überhangflächen stetig größer und das Verhältnis der Flächen 14'''/12''' wird ebenfalls größer. Hiebei gehen die Flächen 14''' stets von den Kanten 20''' aus, die für beide Wandungen jeweils in einer einzigen Ebene liegen. Der Neigungswinkel $\epsilon_s$''' bleibt für die Flächen 14''' stets konstant. Das bedeutet für die Absatzflächen 12''' eine schraubenförmige Verwindung, weil der Winkel $\gamma$ bis zur Bandmitte hin gegen Null geht. (Fig. 4c, 4d).

Bei Belastung wird der Feineinschnitt 1''' im Bereich 6''' formschlüssig zusammengepreßt und gibt durch die vollständige Verzahnung einen guten Beitrag zur Fahrstabilität. Zum Mittelbereich des Bandes hin nimmt der Anteil der spitzwinkeligen Griffkanten zu und liefert erhöhte Beiträge zum Griff.

## Patentansprüche

1. Reifen mit einer Lauffläche, die Profilelemente wie Blöcke, in Umfangsrichtung verlaufende Rippen oder dergleichen aufweist, die mit Lamellenfeineinschnitten und/oder Nuten versehen sind, deren einander gegenüberliegende Wandbereiche mittels vor- bzw. rückspringender Kanten und Flächen eine zumindest zum Teil voneinander abweichende dreidimensionale Struktur besitzen und zumindest zum Teil nicht parallel zueinander verlaufen, dadurch gekennzeichnet, daß die Wandbereiche überwiegend rückspringende Flächenelemente aufweisen, welche in spitzem Winkel ($\epsilon_s$', $\epsilon'_s$', $\epsilon_s$'') zur Fahrfläche stehen, wobei bezüglich der Richtung des Feineinschnittverlaufes die rückspringenden Flächenelemente der einen Wand gegensinnig zu jenen der anderen Wand angeordnet sind.

2. Reifen nach Anspruch 1, dadurch gekennzeichnet, daß der spitze Winkel ($\epsilon_s$, $\epsilon_s$', $\epsilon_s$''') im Inneren des Lamellenfeineinschnittes bzw. der Nut (1, 1', 1'', 1''') mit zunehmender Tiefe kleiner wird.

3. Reifen nach Anspruch 1, dadurch gekennzeichnet, daß die Flächenelemente zumindest teilweise gekrümmt sind.

4. Reifen nach einem oder mehreren der Ansprüche 1 bis 3, dadurch gekennzeichnet, daß die Strukturen gegenüberliegender Wandbereiche (2, 2', 2'', 2'''; 3, 3', 3'', 3''') im Inneren der Lamellenfeineinschnitte bzw. Nuten als Bild und Spiegelbild ausgebildet und gegeneinander verschoben sind.

5. Reifen nach einem der Ansprüche 1 bis 4, dadurch gekennzeichnet, daß eine der beiden gegenüberliegenden Wandbereiche (2) der Feineinschnitte bzw. Nuten (1) als ebene Fläche ausgebildet ist.

## Claims

1. Tyre, having a tread surface which includes profile elements, such as blocks, ribs which extend in the circumferential direction, or the like, which elements are provided with fine laminar incisions and/or grooves, the oppositely situated wall regions of said incisions and/or grooves having three-dimensional structures which differ at least partially from one another by means of forwardly orientated or backwardly orientated edges and surfaces, and at least some of said wall regions extending in a non-parallel manner relative to one another, characterised in that the wall regions have mainly backwardly orientated surface elements which lie at an acute angle ($\epsilon_s'$, $\epsilon_s''$, $\epsilon_s'''$) relative to the travel surface, the backwardly orientated surface elements of one wall being disposed in the opposite direction to those of the other wall with respect to the direction of the configuration of the fine incisions.

2. Tyre according to claim 1, characterised in that the acute angle ($\epsilon_s$, $\epsilon_s'$, $\epsilon_s'''$) in the interior of the fine lamellar incision or respectively of the groove (1, 1', 1'', 1''') becomes smaller with increasing depth.

3. Tyre according to claim 1, characterised in that the surface elements are at least partially curved.

4. Tyre according to one or more of claims 1 to 3, characterised in that the structures of oppositely situated wall regions (2, 2', 2'', 2''',; 3, 3', 3'', 3''') in the interior of the fine laminar incisions or respectively of the grooves are configured as images and mirror images and are offset relative to one another.

5. Tyre according to one of claims 1 to 4, characterised in that one of the two oppositely situated wall regions (2) of the fine incisions or respectively of the grooves (1) is configured as a flat surface.

## Revendications

1. Bandage pneumatique comportant une bande de roulement munie d'éléments de profilage tels que des blocs, des nervures s'étendant dans la direction périphérique, ou des configurations similaires qui sont pourvues de minces entailles de lamellisation et/ou de gorges dont les régions de paroi mutuellement opposées possèdent une structure tridimensionnelle différant au moins en partie suite à la présence de bords et surfaces présentant respectivement une saillie ou un retrait, et s'étendent, au moins en partie, non parallèlement les unes aux autres, caractérisé par le fait que les régions de paroi présentent principalement des éléments de surface en retrait qui forment un angle aigu ($\epsilon_s'$, $\epsilon_s''$, $\epsilon_s'''$) par rapport à la surface de déplacement, les éléments de surface en retrait de l'une des parois étant agencés, vis-à-vis de la direction du tracé des entailles minces, en sens inverse de ces de l'autre paroi.

2. Bandage pneumatique selon la revendication 1, caractérisé par le fait que l'angle aigu ($\epsilon_s$, $\epsilon_s'$, $\epsilon_s'''$) diminue au fur et à mesure que la profondeur augmente à l'intérieur de la mince entaille de lamellisation ou, respectivement, de la gorge (1, 1', 1'', 1''').

3. Bandage pneumatique selon la revendication 1, caractérisé par le fait que les éléments de surface sont au moins partiellement courbés.

4. Bandage pneumatique selon l'une ou plusieurs des revendications 1 à 3, caractérisé par le fait que les structures de régions de paroi opposées (2, 2', 2'', 2''' ; 3, 3', 3'', 3''') sont réalisées en tant qu'image et image spéculaire à l'intérieur des minces entailles de lamellisation ou, respectivement, des gorges, et sont mutuellement décalées.

5. Bandage pneumatique selon l'une des revendications 1 à 4, caractérisé par le fait que l'une des deux régions de paroi (2) mutuellement opposées des entailles minces ou, respectivement, des gorges (1) est réalisée sous la forme d'une surface plane.

Fig. 1b

Fig. 1a

Fig. 1c

Fig. 2c

Fig. 2b

Fig. 2a

9

Fig. 3d

Fig. 3c

Fig. 3a

Fig. 3b

Fig. 4a

Fig. 4b

Fig. 4c

Fig. 4d